**Europäisches Patentamt**

(19) **European Patent Office**

**Office européen des brevets**

(11) Veröffentlichungsnummer: **0 100 812**
**A2**

(12) **EUROPÄISCHE PATENTANMELDUNG**

(21) Anmeldenummer: **83102248.8**

(22) Anmeldetag: **08.03.83**

(51) Int. Cl.³: **B 01 D 53/06**
**B 01 J 20/34**

(30) Priorität: **18.08.82 DE 3230656**

(43) Veröffentlichungstag der Anmeldung:
**22.02.84 Patentblatt 84/8**

(84) Benannte Vertragsstaaten:
**BE-DE FR GB IT NL**

(71) Anmelder: **Uhde GmbH**
**Friedrich-Uhde-Strasse 15 Postfach 262**
**D-4600 Dortmund 1(DE)**

(72) Erfinder: **Buxel, Ludwig Michael**
**Zum Gehölz 5 b**
**D-4355 Waltrop(DE)**

(72) Erfinder: **Mühlhaus, Ludwig, Dr.**
**Nothweg 92**
**D-5860 Iserlohn(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) Verfahren zur Wiederaufheizung und Förderung eines körnigen Wärmeträgers sowie Vorrichtung insbesondere zu dessen Durchführung.

(57) Mit einem Verfahren und/oder einer Vorrichtung zur Wiederaufheizung und Förderung eines körnigen, mittels eines Gases förderbaren Wärmeträgers, inebesondere Sand, vorzugsweise zum Einsatz bei der Desorption durch Erhitzung von beladenen, stückigen Adsorptionsmitteln, wie beispielsweise Aktivkohlepellets, sollen insbesondere hohe Fördergeschwindigkeiten und die Förderung bei sher hohen Temperaturen des Wärmeträgers vermieden werden und damit die Wirtschaftlichkeit erhöht werden. Dies wird dadurch erreicht, daß der Wärmeträger von einer Fördereinrichtung mittels Förderluft in einen Abscheider gefördert und nachfolgend unter Einhaltung eines natürlichen Gefälles einem Aufheizer, einem Desorber, anschließend einer Einrichtung zur Trennung von Wärmeträger und Adsorptionsmittel und zurück zum Beginn der Fördereinrichtung geführt wird, wobei dann, wenn die Vorrichtung mit Sand als Wärmeträger betrieben wird, sich diese dadurch auszeichnet, daß einer förderluftbetriebenen Vertikalfördereinrichtung (4) für den Sand an der höchsten Stelle des Sandkreislaufes ein Sandabscheider (5) nachgeordnet ist und diesem unter Beibehaltung eines natürlichen Gefälles ein Sandaufheizer (6), ein Desorber (7), eine Trenneinrichtung (8) für den Sand und das Desorptionsmittel und der Beginn (3) der Fördereinrichtung (4) nachgeordnet sind.

./...

FIG. 1

- 1 -

0100812

"Verfahren zur Wiederaufheizung und Förderung eines körnigen Wärmeträgers sowie Vorrichtung insbesondere zu dessen Durchführung"

Die Erfindung richtet sich auf ein Verfahren sowie eine Vorrichtung zur Wiederaufheizung und Förderung eines körnigen, mittels eines Gases förderbaren Wärmeträgers, insbesondere Sand, vorzugsweise zum Einsatz bei der Desorption durch Erhitzung von beladenen, stückigen Adsorptionsmitteln, wie beispielsweise Aktivkohlepellets.

In "Chem. Ind. XXVII/Aug. 1975, Seiten 457 - 461" beschreibt Knoblauch u.a. die Betriebserfahrungen mit der Rauchgasentschwefelung. Bei einem dort beschriebenen Rauchgasentschwefelungsverfahren mit Desorption von beladenem Aktivkoks, wobei dieser Aktivkoks mit Sand von ca. 750 °C in einem speziell konstruierten Desorber in Kontakt gebracht wird, wird der den Desorber verlassende Sand nach der Trennung von Koks einer Brennkammer zugeführt und mit den dort erzeugten heißen Rauchgasen bei gleichzeitiger Wiederaufheizung nach oben zur Wiederverwendung gefördert. Dieser sogenannte "Gaslift" hat eine Reihe von Vorteilen, allerdings auch schwerwiegende Nachteile, die insbesondere darin bestehen, daß sehr hohe Gasgeschwindigkeiten vorliegen, daß es dadurch bedingt zu großem Verschleiß und zu einem sehr großen Energiebedarf kommt. Auch müssen ein Teil der Rauchgase im Kreislauf geführt werden, um die Ausmauerung des Gasliftes zu kühlen. Gleichzeitig bedingt die

0100812

gegen hohe Temperaturen resistente Ausmauerung sehr hohe Anlagekosten.

Aufgabe der Erfindung ist die Schaffung einer Lösung, mit der die oben beschriebenen Nachteile vermieden werden, wobei insbesondere geringere Fördergeschwindigkeiten des Fördergases möglich gemacht werden, bei gleichzeitig niedrigeren Temperaturen.

Mit einem Verfahren der eingangs bezeichneten Art wird diese Aufgabe gemäß der Erfindung dadurch gelöst, daß der Wärmeträger von einer Fördereinrichtung mittels Förderluft in einen Abscheider gefördert und nachfolgend unter Einhaltung eines natürlichen Gefälles einem Aufheizer, einem Desorber, anschließend einer Einrichtung zur Trennung von Wärmeträger und Adsorptionsmittel und zurück zum Beginn der Fördereinrichtung geführt wird.

Mit der Erfindung wird erreicht, daß der Wärmeträger bei einer Temperatur förderbar ist, die allenfalls derjenigen Temperatur entspricht, die der Wärmeträger bei Verlassen der Desorptionsanlage aufweist, das Fördergas, z.B. Luft, kann dabei eine sehr viel niedrigere Temperatur aufweisen. Damit können andere Auskleidungen der Förderstrecke ebenso möglich gemacht werden, wie sehr viel niedrigere Fördergeschwindigkeiten. Auch ist es durch die Anordnung des Aufheizers im Bereich des höchsten Punktes des Systemes mit nachfolgender Ausnutzung eines natürlichen Gefälles für den Wärmeträger möglich, z.B. mechanische Fördermittel in der Fördereinrichtung entweder ausschließlich zur Förderluft oder teilweise damit einzusetzen.

In Ausgestaltung sieht die Erfindung vor, daß wenigstens ein Teil der Förderluft nach Trennung vom Wärmeträger dem Erhitzer zugeführt wird. Damit ist erreichbar, daß die bei der Förderung vom Wärmeträger an die Förderluft abgegebene Wärmemenge nicht nutzlos z.B. einem Kamin oder einer nachgeschalteten Einrichtung zugeführt wird, sondern im Prozeß verbleibt.

Die Erfindung kann auch vorsehen, daß die Förderluft über einen vom Rauchgas des Aufheizers beheizten Wärmetauscher vorgewärmt wird und/oder daß ein Teil der dem Aufheizer zugeführten Luft über einen der Wärmeträger-Adsorptionsmittel-Trenneinrichtung nachgeordneten Wärmeträger-Kühler geführt wird. Mit diesen Verfahrensvarianten läßt sich eine weitere Ausnutzung der eingesetzten Wärme erreichen.

Das Verfahren nach der Erfindung kann auch dahingehend ausgestaltet sein, daß bei Rauchgasentschwefelung mittels Aktivkoks der Aktivkoksabrieb mit als Brennstoff zur Erhitzung des Wärmeträgers eingesetzt wird. Damit wird der Einsatz von Brennstoff für den Aufheizer reduziert. Nach der Erfindung kann auch vorgesehen sein, daß die Förderung kontinuierlich und/oder im Taktbetrieb durchführbar ist.

Die weiter oben formulierte Aufgabe wird mit einer Vorrichtung insbesondere zur Durchführung des oben beschriebenen Verfahrens dadurch gelöst, daß einer förderluftbetriebenen Vertikalfördereinrichtung für den Sand an der höchsten Stelle des Sandkreislaufes ein Sandabscheider nachgeordnet ist und diesem unter Beibehaltung eines natürlichen Gefälles ein Sandaufheizer, ein Desorber, eine Trenneinrichtung für den Sand und das Adsorptionsmittel und der Beginn der Fördereinrichtung nachgeordnet sind.

Erfindungsgemäß weist die Vorrichtung eine Reihe von Gestaltungen auf, die für sich allein und in Kombination zweckmäßige Ausgestaltungen darstellen. So kann vorgesehen sein, daß der Sandabscheider als Zyklon oder als Abscheidekammer ausgebildet ist und/oder daß der Sandaufheizer als Drehrohrofen, als Wanderbett mit vorgeschalteter Brennkammer oder als Wirbelschichtofen ausgebildet ist und/oder daß der Desorber und die Sand/Adsorptionsmitteltrennung als ein gemeinsames Einrichtungsteil, vorzugsweise als eine Schwingrinne, ausgebildet sind und/oder daß der Trenneinrichtung Adsorptionsmittel/Sand ein Sandkühler zur Vorwärmung von Verbrennungsluft nachgeschaltet ist.

Die Erfindung ist beispielsweise anhand der Zeichnung näher beschrieben. Diese zeigt in

- 5 -

0100812

Fig. 1 ein Blockschaltbild einer Vorrichtung nach einem Ausführungsbeispiel der Erfindung bei der Rauchgasentschwefelung mit Aktivkoks sowie in

Fig. 2 ein abgewandeltes Ausführungsbeispiel.

Der in den Figuren punktiert wiedergegebene Wärmeträger bzw. Sandkreislauf ist mit 1 bezeichnet. Ausgehend von der relativ zur Schwerkraft tiefsten Position wird der Sand mittels z.B. von einem Kompressor 2 kommenden Preßluft bei 3 in die Förderstrecke 4 eingeblasen. In einem Abscheider 5 an der höchsten Stelle des Sandkreislaufes wird der nach oben geförderte Sand von·der Trägerluft getrennt und einem Aufheizer 6 zugeführt. Nach Erhitzung wird der erhitzte Sand einem Desorber 7 und nachfolgend einer Trenneinrichtung 8 zugeführt, in der der Sand vom Adsorptionsmittel, z.B. von Koks, getrennt wird. Nach der Trennung wird der Sand erneut bei 3 in die Fördereinrichtung eingespeist. Mit 9 sind in den Figuren noch Sandvorlagen eingezeichnet, die insbesondere dazu dienen, einen Druckausgleich zwischen den einzelnen Verfahrensstufen zu verhindern.

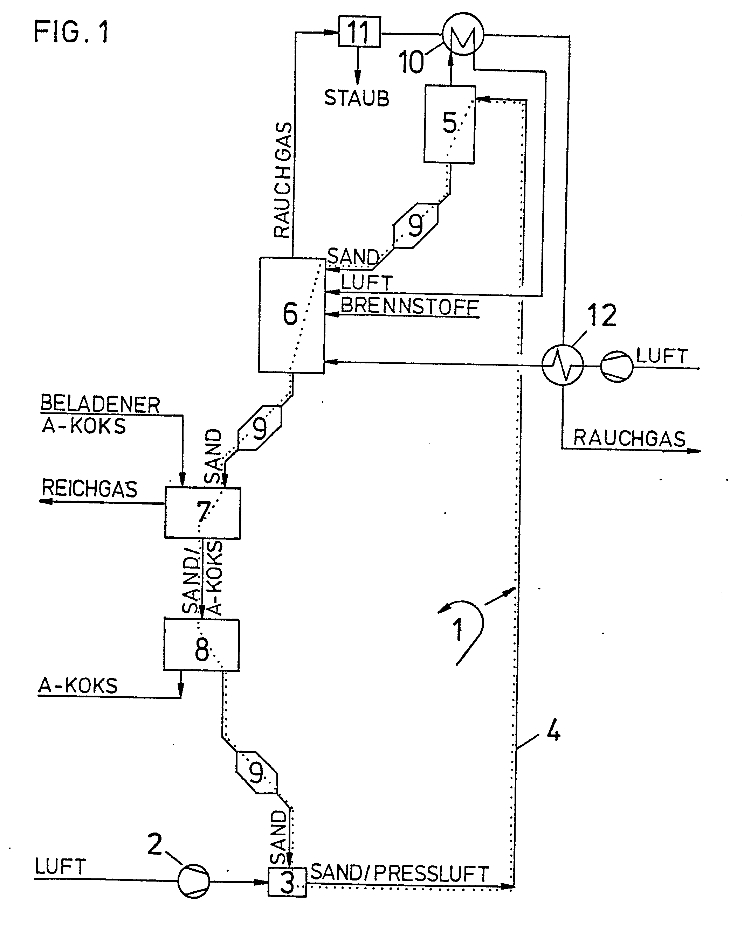

Wie aus Fig. 1 erkennbar, sind alle Vorrichtungsteile zwischen der höchsten Stelle und der tiefsten Stelle der Förderstrecke 4 für den Sand in Schwerkraftsrichtung untereinander angeordnet.

Die Preßluft wird vom Sandabscheider über einen rauchgas-

- 6 -

0100812

beheizten Wärmetauscher 10 dem Aufheizer 6 zugeführt, wobei dessen Rauchgase noch über eine Staubtrenneinrichtung 11 und den bereits genannten Wärmetauscher 10 und ggf. einen weiteren Wärmetauscher 12 einem nicht näher dargestellten Kamin zugeführt werden.

Die Zuführung des Adsorptionsmittels ebenso wie die Abführung des Reichgases aus der Desorption wird nur angedeutet.

Beispiel:

15.000 kg beladener Aktivkoks mit einer Temperatur von 90 °C aus einer Rauchgasentschwefelungsanlage werden im Desorber mit 169.600 kg Sand mit einer Temperatur von 711 °C gemischt. Infolge der Aufheizung des Aktivkoks werden 3.400 kg Reichgas bei 450 °C frei. Das aus dem Desorber ablaufende Aktivkoks-Sand-Gemisch wird in einer Trennvorrichtung getrennt in 11.600 kg Aktivkoks und 169.600 kg Sand von je 650 °C. Während der Aktivkoks zurück zur Adsorption gefördert wird, wird die Sandmenge mittels 37.700 kg Luft von 50 °C bei 500 m bar über einen Zyklon in den Aufheizer gefördert. Die im Zyklon abgetrennte Luftmenge ist die Verbrennungsluft für 638 kg Öl zur Aufheizung des Sandes im Aufheizer.

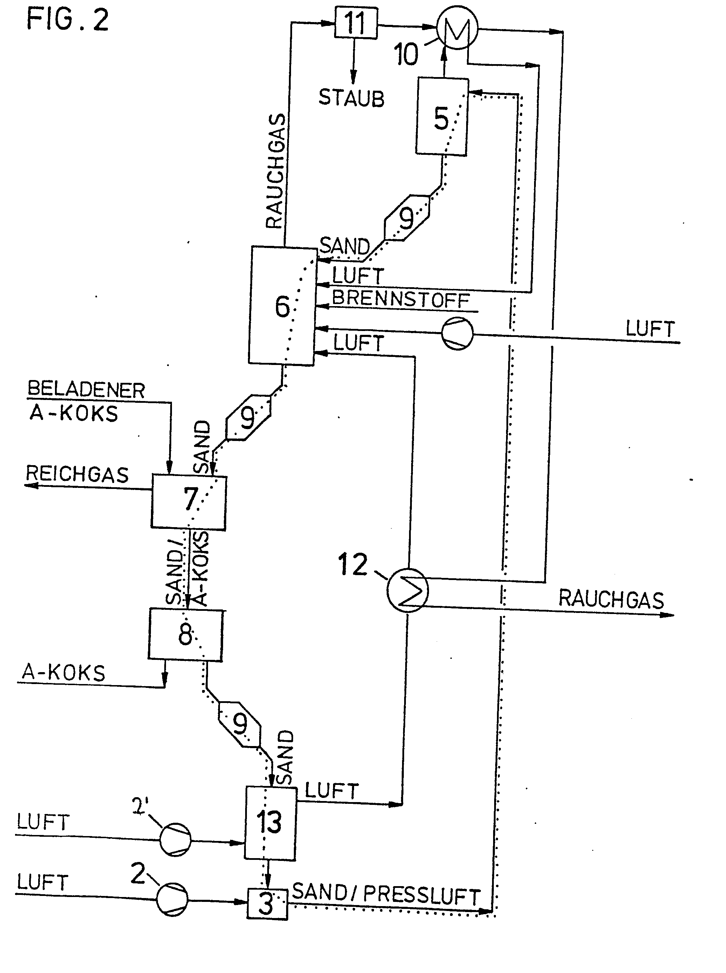

Bei der Variante nach Fig. 2 ist der Trenneinrichtung Adsorptionsmittel/Sand 8 ein Sandkühler 13 nachgeordnet, der

- 7 -

0100812

wiederum z.B. preßluftbeaufschlagt ist, wobei die erwärmte Luft aus dem Sandkühler 13 wiederum dem Aufheizer 6' zuführbar ist. Die übrigen Verhältnisse sind bei dieser Variante nach Fig. 2 dieselben wie nach Fig. 1, so daß sich eine weitere Beschreibung erübrigt.

Natürlich sind die beschriebenen Ausführungsbeispiele noch in vielfacher Hinsicht abzuändern, ohne den Grundgedanken der Erfindung zu verlassen. So ist die Erfindung insbesondere nicht auf ein besonderes Wärmeträgermittel beschränkt und neben dem erwähnten Sand können hier auch andere Stoffe eingesetzt werden. Das gleiche gilt für die Förderluft, hier können alle in Frage kommenden Gase einsetzbar sein. Auch kann die Förderstrecke selbst ausschließlich mechanisch betrieben werden, wobei ggf. die Förderstrecke zur Gewinnung von warmer Brennluft für den Aufheizer luftgekühlt ausgeführt werden kann u. dgl. mehr.

- 8 -

0100812

Ansprüche :

1. Verfahren zur Wiederaufheizung und Förderung eines körnigen, mittels eines Gases förderbaren Wärmeträgers, insbesondere Sand, vorzugsweise zum Einsatz bei der Desorption durch Erhitzung von beladenen, stückigen Adsorptionsmitteln, wie beispielsweise Aktivkohlepellets, dadurch gekennzeichnet, daß der Wärmeträger von einer Fördereinrichtung mittels Förderluft in einen Abscheider gefördert und nachfolgend unter Einhaltung eines natürlichen Gefälles einem Aufheizer, einem Desorber, anschließend einer Einrichtung zur Trennung von Wärmeträger und Adsorptionsmittel und zurück dem Beginn der Fördereinrichtung zugeführt wird.

2. Verfahren nach Anspruch 1, dadurch gekennzeichnet, daß wenigstens ein Teil der Förderluft nach Trennung vom Wärmeträger dem Aufheizer zugeführt wird.

3. Verfahren nach Anspruch 1 oder 2, dadurch gekennzeichnet, daß die Förderluft über einen vom Rauchgas des Aufheizers beheizten Wärmetauscher vorgewärmt wird.

4. Verfahren nach einem der vorangehenden Ansprüche, dadurch gekennzeichnet, daß ein Teil der dem Aufheizer zugeführten Luft über einen der Wärmeträger-Adsorptionsmittel-Trenneinrichtung nachgeordneten Wärmeträger-Kühler geführt wird.

5. Verfahren nach einem der vorangehenden Ansprüche, dadurch gekennzeichnet, daß bei Adsorption mittels Aktivkoks der Aktivkoksabrieb mit als Brennstoff zur Erhitzung des Wärmeträgers eingesetzt wird.

6. Verfahren nach einem der vorangehenden Ansprüche, dadurch gekennzeichnet, daß die Förderung kontinuierlich und/oder im Taktbetrieb durchführbar ist.

7. Vorrichtung insbesondere zur Durchführung des Verfahrens nach Anspruch 1 oder einem der folgenden mit Sand als Wärmeträger, dadurch gekennzeichnet, daß einer förderluftbetriebenen Vertikalfördereinrichtung (4) für den Sand an der höchsten Stelle des Sandkreislaufes ein Sandabscheider (5) nachgeordnet ist und diesem unter Beibehaltung eines natürlichen Gefälles ein Sandaufheizer (6), ein Desorber (7), eine Trenneinrichtung (8) für den Sand und das Adsorptionsmittel und der Beginn (3) der Fördereinrichtung (4) nachgeordnet sind.

8. Vorrichtung nach Anspruch 7, dadurch gekennzeichnet, daß der Sandabscheider (5) als Zyklon oder als Abscheidekammer ausgebildet ist.

9. Vorrichtung nach Anspruch 7 oder dem folgenden, dadurch gekennzeichnet, daß der Sandaufheizer (6) als Drehrohrofen, als Wanderbett mit vorgeschalteter Brennkammer oder als Wir-

0100812

belschichtofen ausgebildet ist.

10. Vorrichtung nach Anspruch 7 oder einem der folgenden, dadurch gekennzeichnet, daß der Desorber (7) und die Sand/ Adsorptionsmitteltrennung (8) als ein gemeinsames Einrichtungsteil, vorzugsweise als eine Schwingrinne, ausgebildet sind.

11. Vorrichtung nach Anspruch 7 oder einem der folgenden, dadurch gekennzeichnet, daß der Trenneinrichtung (8) Adsorptionsmittel/Sand ein Sandkühler (13) zur Vorwärmung von Verbrennungsluft nachgeschaltet ist.

FIG. 2

0100812